# EUROPÄISCHE PATENTSCHRIFT

(11) **EP 1 027 229 B1**
(45) Veröffentlichungstag und Bekanntmachung des Hinweises auf die Patenterteilung: **13.02.2002**
(21) Anmeldenummer: 98951444.3
(22) Anmeldetag: 21.09.1998
(51) Int. Cl.: B60R 11/02

(54) **HALTER FÜR EIN MOBILTELEFON (HANDY)**
HOLDER FOR A MOBILE TELEPHONE
SUPPORT POUR TELEPHONE MOBILE (PORTABLE)

(30) Priorität: 22.10.1997 DE 29718761 U
(43) Veröffentlichungstag der Anmeldung: 16.08.2000
(73) Patentinhaber: fischerwerke Artur Fischer GmbH & Co. KG, 72178 Waldachtal (DE)
(72) Erfinder: PLOCHER, Bernd, D-72108 Rottenburg (DE); HAAGE, Manfred, D-72280 Dornstetten (DE)
(86) Internationale Anmeldenummer: EP9806013
(87) Internationale Veröffentlichungsnummer: WO9920487

(56) Entgegenhaltungen:
- EP-A- 0 384 172
- DE-A- 4 107 997
- DE-U- 29 521 459
- DE-U- 29 601 412
- US-A- 4 617 430

## Beschreibung

Die Erfindung betrifft einen Halter für ein Mobiltelefon (Handy) mit den Merkmalen des Oberbegriffs des Anspruchs 1. Mit Mobiltelefon ist ein Gerät mit ungefährer Form und Größe eines Telefonhörers gemeint.

Ein gattungsgemässer Halter ist aus DE-U- 29 521 459 bekannt.

Derartige Halter sind an sich bekannt. Sie dienen dazu, ein Mobiltelefon in einem Kraftwagen in einer Position zu halten, die einem Fahrer die Benutzung des Mobiltelefons ermöglicht, ohne das Mobiltelefon mit einer Hand halten zu müssen. Es sind Halter bekannt, die beispielsweise eine Klemmvorrichtung mit verstellbaren, an Seiten des Mobiltelefons angreifenden Spannbacken aufweisen und die dadurch zum Halten unterschiedlicher Mobiltelefon-Typen geeignet sind. Auch sind Halter bekannt, die speziell auf ein bestimmtes Mobiltelefon abgestimmt und nur für dieses verwendbar sind. Die bekannten Halter weisen eine Befestigungseinrichtung zum Anbringen des Halters beispielsweise an einem Amaturenbrett oder einer Mittelkonsole des Kraftwagens auf.

Der Erfindung liegt die Aufgabe zugrunde, einen Halter für ein Mobiltelefon universell verwendbar auszubilden.

Diese Aufgabe wird erfindungsgemäß durch die Merkmale der Ansprüche 1 und 9 gelöst. Der erfindungsgemäße Halter weist eine Dreipunktbefestigung mit drei Befestigungsfüßen auf, die an den Ecken eines gedachten Dreiecks an der Befestigungseinrichtung angebracht sind. Die Befestigungsfüße sind beispielsweise durch Kugelgelenke in allen Richtungen schwenkbar. Die Dreipunktbefestigung hat zunächst den Vorteil, daß es sich um eine mechanisch bestimmte Befestigung handelt. Jeder Befestigungsfuß liegt an einer Befestigungsfläche, also beispielsweise dem Amaturenbrett oder der Mittelkonsole des Kraftwagens an. Dabei passen sich die Befestigungsfüße infolge ihrer Schwenkbarkeit in allen Richtungen beim Befestigen des Halters an die Form der Befestigungsfläche an, d.h. sie liegen auch auf einer unebenen, beispielsweise konvex oder konkav gewölbten Befestigungsfläche vollflächig auf. Auf diese Weise ist eine maximale Befestigungskraft jedes Befestigungsfußes an einer Befestigungsfläche und eine spannungsfreie Anbringung des Halters im Kraftwagen gewährleistet. Der erfindungsgemäße Halter paßt sich an Befestigungsflächen nahezu beliebiger Form an. Weiterer Vorteil der Dreipunktbefestigung ist, daß sie aufgrund der Befestigung mit drei Befestigungsfüßen hohe Kräfte und aufgrund des Abstandes der Befestigungsfüße voneinander hohe Momente aufzunehmen in der Lage ist, wie sie durch die Belastung des Halters mit einem Hebelarm zur Befestigungseinrichtung auftreten. Die Befestigungsfüße können beispielsweise durch Kleben oder mittels Schrauben im Kraftwagen angebracht werden.

Um das Mobiltelefon so auf den Fahrer ausrichten zu können, daß seine Tasten gut sicht- und bedienbar, ein Anzeigenfeld (Display) gut ablesbar und ein Mikrofon sowie ein Lautsprecher des Mobiltelefons in Richtung des Fahrers ausgerichtet sind, weist der Halter bei einer Ausgestaltung der Erfindung ein Schwenklager auf, mit dem ein das Mobiltelefon aufnehmendes Halteteil gegenüber der Befestigungseinrichtung des Halters schwenkbar ist. Durch das Schwenklager läßt sich das Mobiltelefon unabhängig von der räumlichen Lage der Befestigungsfläche im Kraftwagen, an der der Halter angebracht ist, in Bezug auf den Fahrer in eine für die Benutzung des Telefons durch den Fahrer günstige Position ausrichten.

Um das Mobiltelefon in seiner eingestellten Position zu fixieren, weist der erfindungsgemäße Halter in einer Weiterbildung eine Feststelleinrichtung auf, mit der sich das Schwenklager in jeder Stellung fixieren läßt. Die Feststelleinrichtung verhindert, daß sich der Halter unbeabsichtigt von selbst verstellt. Die eingestellte Position des Mobiltelefons wird auch bei den während der Fahrt auftretenden Belastungen zuverlässig beibehalten.

Bei einer Weiterbildung der Erfindung weist der Halter eine Sicherungseinrichtung für das Schwenklager auf, der das Schwenklager und damit den Halter auch bei gelöster Feststelleinrchtung zusammenhält. Dadurch wird vermieden, daß beispielsweise nach Lösen und vollständigem Herausdrehen einer Klemmschraube der Feststelleinrichtung der Halter in mehrere Teile zerfallen kann. Die Sicherungseinrichtung erlaubt ein Verstellen der Position des Mobiltelefons nach Lösen der Feststelleinrichtung durch Verschwenken und bewirkt dabei, daß das Mobiltelefon weiterhin gehalten ist.

Vorzugsweise ermöglicht das Schwenklager ein Verschwenken des Mobiltelefons in allen Richtungen, um größtmögliche Einstellmöglichkeiten für die Position des Mobiltelefons zu gewährleisten.

Bei einer Ausgestaltung der Erfindung ist ein Kalottengelenk als Schwenklager vorgesehen, also ein Gelenk mit einer Hohlkalotte, die durch eine Öffnung hindurch von einer Tellerscheibe oder dgl. hintergriffen wird, welche mit dem das Mobiltelefon aufnehmenden Halteteil verbunden ist, das auf der Außenseite der Hohlkalotte entlang deren Oberfläche verschiebbar aufsitzt.

Um den Winkelverstellbereich des Mobiltelefons über den Schwenkbereich des Schwenklagers hinaus zu vergrößern, ist bei einer Ausgestaltung der Erfindung vorgesehen, das das Mobiltelefon aufnehemende Halteteil in unterschiedlichen Winkellagen am Schwenklager anbringbar auszubilden.

Um den Halter für unterschiedliche Mobiltelefon-Typen verwendbar zu machen ist ein Adapter vorgesehen, der beispielsweise durch Kleben mit dem Mobiltelefon verbindbar ist. Dieser Adapter ist lösbar an dem das Mobiltelefon aufnehmenden Halteteil des erfindungsgemäßen Halters angebracht. Der Adapter kann auch lösbar mit dem Mobiltelefon verbindbar vorgesehen werden. Der Adapter ermöglicht ein schnelles Abnehmen und ein schnelles und positionssicheres Anbringen des Mobiltelefons am erfindungsgemäßen Halter. Der Adapter kann sowohl bei einem Halter mit Dreipunktbefestigung als auch bei einem Halter mit einer anderen Art der Befestigung Verwendung finden.

Vorzugsweise weist der Halter eine Verriegelungseinrichtung mit einer sog. Push-Push-Mechanik mit beispielsweise einer Herzkurve auf. Die Verriegelungseinrichtung verriegelt den Adapter an dem das Mobiltelefon aufnehmenden Halteteil des Halters, wenn der Adapter gegen das Halteteil gedrückt wird und gibt den Adapter nach nochmaligem Drücken des Adapters gegen das Halteteil frei. Die Verriegelungseinrichtung hat den Vorteil, daß das Mobiltelefon durch einfaches Andrücken an das Halteteil am Halter anbringbar und durch emeutes Drücken am Mobiltelefon wieder abnehmbar ist, zusätzliche Handgriffe zum Verriegeln oder Lösen sind nicht notwendig.

Die Erfindung wird nachfolgend anhand eines in der Zeichnung dargestellten Ausführungsbeispiels näher erläutert. Es zeigen:
- Figur 1: eine Explosionsdarstellung eines erfindungsgemäßen Halters in Perspektive, und
- Figuren 2 und 3: den zusammengesetzten Halter aus Figur 1 in zwei Stellungen in perspektivischer Darstellung.

Der erfindungsgemäße, in der Zeichnung dargestellte, insgesamt mit 10 bezeichnete Halter für ein nicht dargestelltes Mobiltelefon (Handy) weist eine Befestigungseinrichtung 12 zum Befestigen des Halters 10 beispielsweise an einem Amaturenbrett oder an einer Mittelkonsole eines Kraftwagens auf. Die Befestigungseinrichtung 12 umfasst eine Grundplatte 14, die in Draufsicht im wesentlichen die Form eines gleichseitigen Dreiecks mit gerundeten Ecken hat. An einer Unterseite der Grundplatte 14 sind im Bereich ihrer Ecken drei plattenförmige Befestigungsfüße 16 angebracht. Die Befestigungsfüße 16 sind mittels Kugelgelenken 18, 20 gelenkig in allen Richtungen schwenkbar an der Grundplatte 14 angebracht. Die Kugelgelenke 18, 20 weisen eine mit den Befestigungsfüßen 16 einstückige Gelenkkugel 18 auf, die in einer komplementären Gelenkpfanne 20 aufgenommen ist, welche einstückig mit der Grundplatte 14 ist. Unterseiten der Befestigungsfüße 16 sind beispielsweise durch einen aufgeklebten, mit einem selbstklebenden Film beschichteten, an sich bekannten Schaumgummistreifen selbstklebend ausgebildet, um den Halter 10 im Kraftwagen befestigen zu können.

Um ein vom erfindungsgemäßen Halter 10 aufgenommenes Mobiltelefon in allen Richtungen verschwenken zu können, weist der erfindungsgemäße Halter 10 ein Kalottengelenk 22 als Schwenklager auf: Die Grundplatte 12 weist eine auf ihrer Oberseite überstehende Hohlkalotte 24 in ihrer Mitte auf, die mit einem in der Zeichnung nicht sichtbaren Mittelloch versehen ist. In einer Innenseite der Hohlkalotte 24 liegt eine Tellerscheibe 26 an, deren Rand einer Innenwölbung der Hohlkalotte 24 angepasst gewölbt ist. Auf einer Außenseite der Hohlkalotte 24 befindet sich ein Träger 28, der in etwa die Form eines Trichters hat, dessen aufgeweitete Seite eine zur Außenwölbung der Hohlkalotte 24 komplementäre, konkave kugelförmige Innenwölbung aufweist, mit der der Träger 28 auf der Hohlkalotte 24 aufsitzt. Der Träger 28 weist zwei federelastisch ausgebildete Rastfinger 30 mit Rastnasen 32 an ihren freien Enden auf. Die Rastfinger 30 durchgreifen das in der Zeichnung nicht sichtbare Mittelloch der Hohlkalotte 24 der Grundplatte 14. Desweiteren durchgreifen die Rastfinger 30 Durchbrüche 34 der Tellerscheibe 26, wobei die Rastnasen 32 an den freien Enden der Rastfinger 30 die Tellerscheibe 26 hintergreifen. Über seine Rastfinger 30 mit den Rastnasen 32 ist der auf der Außenseite der Hohlkalotte 24 befindliche Träger 28 mit der auf der Innenseite der Hohlkalotte 24 befindlichen Tellerscheibe 26 verbunden. Der Träger 28 kann auf der Hohlkalotte 24 in allen Richtungen verschoben werden, wobei die Tellerscheibe 26 die Bewegungen des Trägers 28 auf der Innenseite der Hohlkalotte 24 mitmacht. Durch die Verschiebung des Trägers 28 auf der Hohlkalotte 24 wird der Träger 28 gegenüber der Grundplatte 14 verschwenkt. Das nicht sichtbare Mittelloch der Hohlkalotte 24 hat einen Durchmesser, der eine Verschiebung des Trägers 28 auf der Hohlkalotte 24 und damit ein Verschwenken des Trägers 28 ermöglicht. Die mit dem Träger 28 verbundene Tellerscheibe 26 hält den Träger 28 in Anlage an der Hohlkalotte 24.

Der Träger 28 wird von einer Klemmschraube 36 durchgriffen, die in ein Gewindeloch 38 in der Mitte der Tellerscheibe 26 eingeschraubt ist. Tellerscheibe 26 und Klemmschraube 36 bilden eine Feststelleinrichtung des erfindungsgemäßen Halters 10. Durch Anziehen der Feststellschraube 36 wird der Träger 28 in seiner jeweiligen Stellung auf der Hohlkalotte 24 der Grundplatte 14 und somit im gerade eingestellten Winkel des Trägers 28 in Bezug auf die Grundplatte 14 fixiert. Die Rastfinger 30, die die Tellerscheibe 26 mit ihren Rastnasen 32 hintergreifen, bilden zusammen mit der Tellerscheibe 26 eine Sicherungseinrichtung des Halters 10. Sie halten den Träger 28 auch bei vollständig herausgedrehter Klemmschraube 36 in Anlage an der Hohlkalotte 24 der Grundplatte 14.

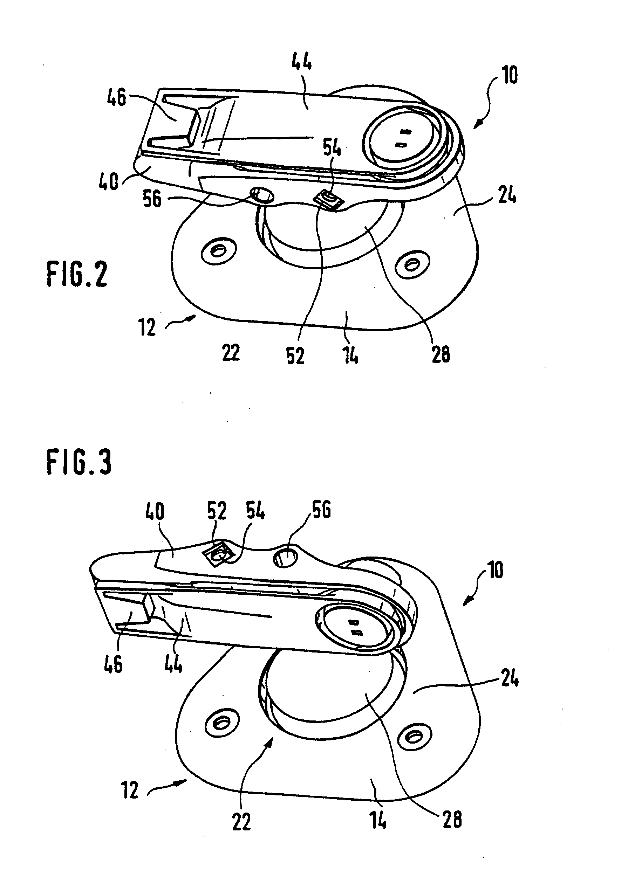

Auf den Träger 28 ist ein längliches, näherungsweise plattenförmiges Halteteil 40 aufgesetzt. Das Halteteil 40 weist einen in der Zeichnung verdeckten Innenvierkant an seiner Unterseite auf, mit dem es auf einem Vierkant 42 des Trägers 28 aufgesetzt ist. Gehalten wird das Halteteil 40 am Träger 28 mit der Klemmschraube 36, die auch das Halteteil 40 durchgreift. Mit dem Halteteil 40 ist ein länglicher Adapter 44 lösbar verbunden. Der Adapter 44 weist eine Nasenaufnahme 46 (Figuren 2 und 3) an einem Ende auf, mit der er eine in ihm einliegende, in der Zeichnung nicht sichtbare Nase umgreift, die mit dem Halteteil 40 einstückig ist. Mittels der die Nase umgreifenden Nasenaufnahme 46 steht das eine Ende des Adapters 44 in Eingriff mit dem Halteteil 40.

Am anderen Ende von Adapter 44 und Halteteil 40 ist eine Verriegelungseinrichtung mit einer sog. Push-Push-Mechanik 48 zur lösbaren Befestigung des Adapters 44 am Halteteil 40 vorgesehen. Die Push-Push-Mechanik 48 weist eine in der Zeichnung nicht sichtbare Herzkurvensteuerung in ihrem Inneren auf. Derartige Push-Push-Mechaniken 48 sind dem Fachmann an sich bekannt und sollen daher an dieser Stelle nicht erläutert werden. Die Push-Push-Mechanik 48 ist fest in das Halteteil 40 eingesetzt. Die Push-Push-Mechanik 48 weist zwei in der Zeichnung nicht sichtbare Ankerriegel auf, die in einer gelösten Stellung der Push-Push-Mechanik 48 schräg auseinander aus der Push-Push-Mechanik 48 vorstehen und die in einer Verriegelungsstellung in die Push-Push-Mechanik 48 zurückgezogen und aufeinander zu bewegt sind. Die Ankerriegel hintergreifen einen Hammerkopf 50 eines mit dem Adapter 44 einstückigen Verriegelungszapfens.

Zur Verriegelung des Adapters 44 am Halteteil 40 wird der Verriegelungszapfen mit seinem Hammerkopf 50 gegen die in ihrer gelösten Stellung befindlichen Ankerriegel der Push-Push-Mechanik 48 gedrückt, wobei sich die Ankerriegel in die Push-Push-Mechanik 48 hineinbewegen, in Eingriff mit dem Hammerkopf 50 gelangen und über diesen den Adapter 44 in der Push-Push-Mechanik 48 und damit am Halteteil 40 verriegeln. Zum Lösen wird der Adapter 44 kurz gegen die Push-Push-Mechanik 48 gedrückt, wodurch deren Ankerriegel gelöst werden und sich in ihre schräg auseinander drückt, wodurch deren Ankerriegel gelöst werden und sich in ihre schräg auseinander und aus der Push-Push-Mechanik vorstehende, gelöste Stellung bewegen und den Adapter 44 freigeben. Der Adapter 44 kann vom Halteteil 40 abgenommen werden.

Der Adapter 44 wird mit dem nicht dargestellten Mobiltelefon beispielsweise durch Kleben verbunden, wodurch sich das Mobiltelefon auf einfache Weise am Halter 10 anbringen und wieder abnehmen läßt. Zum Verkleben kann der Adapter 44 mit einem selbstklebenden Film beispielsweise durch Aufbringen eines selbstklebenden, an sich bekannten Bandes versehen sein.

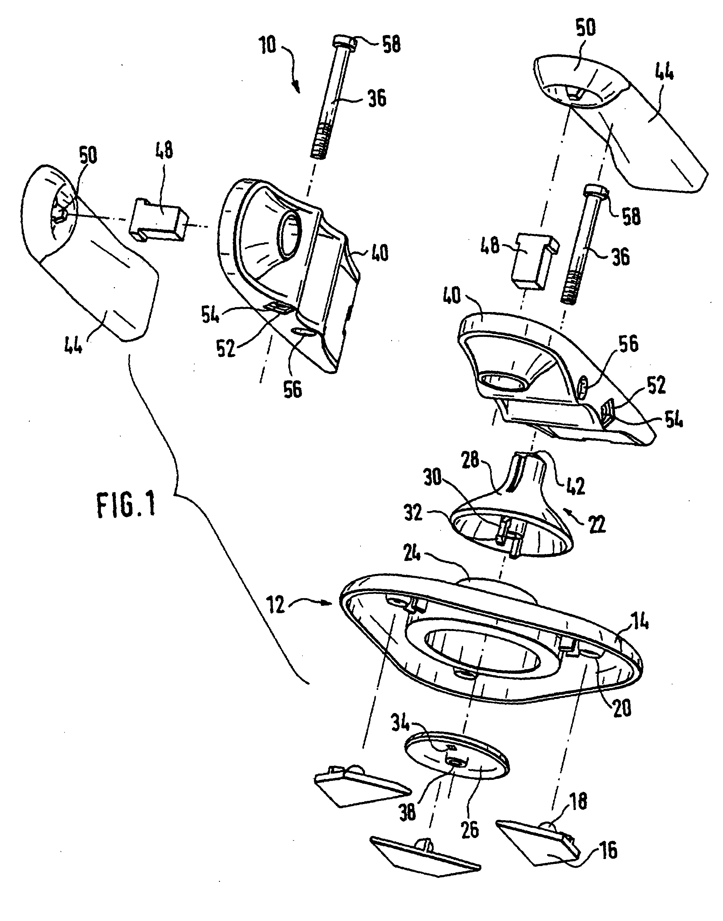

Um das Mobiltelefon auch in Winkelstellungen am Halter 10 anbringen zu können, die der begrenzte Schwenkwinkel des Kalottengelenks 22 an sich nicht zuläßt, weist das Halteteil 40 zwei weitere Innenvierkante 52 auf. Diese beiden Innenvierkante 52 befinden sich auf den beiden Längsseiten des Halteteils 40, sie sind in Längsrichtung des Halteteils 40 zueinander versetzt. Mit diesen (nnenvierkanten 52 läßt sich das Halteteil 40 in einer um 90° um seine gedachte Längsachse verschwenkten Stellung auf den Vierkant 42 des Trägers 28 aufsetzen. Die mit der Unterseite auf den Träger 28 aufgesetzte Stellung des Halteteils 40 ist in Figur 1 in Verlängerung des Trägers 28 sowie in Figur 2 dargestellt. Eine der beiden dazu um 90° gedrehte Winkelstellung, in der das Halteteil 40 am Träger 28 anbringbar und angebracht ist, ist in Figur 1 links von dem mit seiner Unterseite auf dem Träger 28 aufgesetzten Halteteil 40 sowie in Figur 3 dargestellt. Es wird also stets nur ein Halteteil 40 auf den Träger 28 aufgesetzt. Die in Figur 1 doppelte Darstellung des Halteteils 40 mit dem Adapter 44 und der Push-Push-Mechanik 48 dient lediglich der Darstellung zweier unterschiedlicher, um 90° zueinander verdrehter Winkelstellungen, in denen das Halteteil 40 am Träger 28 anbringbar ist.

Die Befestigung des mit einer Längsseite auf den Träger 28 aufgesetzten Halteteils 40 erfolgt ebenfalls mit der Klemmschraube 36, die durch ein Loch 54 in der Mitte des Innenvierkants 52 hindurchgesteckt und den Träger 28 durchgreifend in die Tellerscheibe 26 eingeschraubt ist. Ein mit dem Loch 54 im Innenvierkant 52 deckungsgleiches Loch 56 in einer gegenüberliegenden Längsseite des Halteteils 40 hat einen Durchmesser, der ein Durchstecken eines Kopfes 58 der Klemmschraube 36 zuläßt, so daß sich der Kopf 58 auf einer Innenseite der auf den Vierkant 42 des Trägers 28 aufgesetzten Längsseite des Halteteils 40 befindet, so daß keine um die Breite des Halteteils 40 längere Klemmschraube 36 erforderlich ist.

## Patentansprüche

1. Halter für ein Mobiltelefon (Handy), mit einer Befestigungseinrichtung zum Anbringen des Halters in einem Kraftwagen, **dadurch gekennzeichnet, daß** die Befestigungseinrichtung (12) als Dreipunktbefestigung mit drei Befestigungsfüßen (16), die an den Ecken eines gedachten Dreiecks an der Befestigungseinrichtung (12) angebracht sind, ausgebildet ist, und daß die Befestigungseinrichtung (12) ein Ailseiten-Schwenklager (18, 20) für jeden Befestigungsfuß (16) aufweist, mit dem die Befestigungsfüße (16) allseitig schwenkbar an der Befestigungseinrichtung (12) angebracht sind.

2. Halter nach Anspurch 1, **dadurch gekennzeichnet, daß** die Allseiten-Schwenklager Kugelgelenke (18, 20) aufweisen.

3. Halter nach Anspruch 1, **dadurch gekennzeichnet, daß** der Halter (10) ein Schwenklager (22) aufweist, mit dem ein das Mobiltelefon aufnehmendes Halteteil (40) schwenkbar an der Befestigungseinrichtung (12) befestigt ist.

4. Halter nach Anspruch 3, **dadurch gekennzeichnet, daß** das Schwenklager (22) eine Festelleinrichtung (26, 36) aufweist.

5. Halter nach Anspruch 4, **dadurch gekennzeichnet, daß** das Schwenklager (22) eine Sicherungseinrichtung (26, 30, 32) aufweist, die das Schwenklager (22) auch bei vollständig gelöster Feststelleinrichtung (26, 36) zusammenhält.

6. Halter nach Anspruch 3, **dadurch gekennzeichnet, daß** das Schwenklager (22) allseitig schwenkbar ist.

7. Halter nach Anspruch 6, **dadurch gekennzeichnet, daß** das Schwenklager (22) ein Kalottengelenk aufweist.

8. Halter nach Anspruch 3, **dadurch gekennzeichnet, daß** das das Mobiltelefon aufnehmende Halteteil (40) eine Einrichtung (52, 54) zum Befestigen am Schwenklager (22) aufweist, die eine Befestigung des Halterteils (40) in mindestens zwei unterschiedlichen Winkellagen am Schwenklager (22) ermöglicht.

9. Halter nach Anspruch 1, **dadurch gekennzeichnet, daß** der Halter (10) einen Adapter (44) aufweist, der mit dem Mobiltelefon verbindbar ist, und daß der Adapter (44) lösbar an dem das Mobiltelefon aufnehmenden Halteteil (40) angebracht ist.

10. Halter für ein Mobiltelefon (Handy), mit einer Befestigungseinrichtung zum Anbringen des Halters in einem Kraftwagen, **dadurch gekennzeichnet, daß** der Halter (10) einen Adapter (44) aufweist, der mit dem Mobiltelefon verbindbar ist, und daß der Adapter (44) lösbar an dem das Mobiltelefon aufnehmenden Halteteil (40) angebracht ist.

## Claims

1. Holder for a mobile telephone, having a fastening device for mounting the holder in a motor vehicle, **characterized in that** the fastening device (12) is in the form of a three-point fastening having three fastening feet (16) that are attached to the fastening device (12) at the comers of a notional triangle, and the fastening device (12) has a multi-directional pivot bearing (18,20) for each fastening foot (16), by means of which the fastening feet (16) are mounted on the fastening device (12) so as to be pivotable in any direction.

2. Holder according to claim 1, **characterized in that** the multi-directional pivot bearings have ball-and-socket articulations (18, 20).

3. Holder according to claim 1, **characterized in that** the holder (10) has a pivot bearing (22) by means of which a holding portion (40) receiving the mobile telephone is fastened to the fastening device (12) so as to be pivotable.

4. Holder according to claim 3, **characterized in that** the pivot bearing (22) has an immobilizing device (26, 36).

5. Holder according to claim 4, **characterized in that** the pivot bearing (22) has a safety device (26, 30, 32) which holds the pivot bearing (22) together even when the immobilizing device (26, 36) has been completely released.

6. Holder according to claim 3, **characterized in that** the pivot bearing (22) can be pivoted in any direction.

7. Holder according to claim 6, **characterized in that** the pivot bearing (22) has a dome-like articulation.

8. Holder according to claim 3, **characterized in that** the holding portion (40) receiving the mobile telephone has a device (52, 54) for fastening it to the pivot bearing (22), which device enables the holding portion (40) to be fastened to the pivot bearing (22) in at least two different angled positions.

9. Holder according to claim 1, **characterized in that** the holder (10) has an adapter (44) that can be connected to the mobile telephone and the adapter (44) is releasably mounted on the holding portion (40) receiving the mobile telephone.

10. Holder for a mobile telephone, having a fastening device for mounting the holder in a motor vehicle, **characterized in that** the holder (10) has an adapter (44) that can be connected to the mobile telephone and the adapter (44) is releasably mounted on the holding portion (40) receiving the mobile telephone.

## Revendications

1. Support pour téléphone mobile (portable) avec un dispositif de fixation pour placer le support dans un véhicule automobile, **caractérisé en ce que** le dispositif de fixation (12) est conçu comme fixation à trois points avec trois pattes de fixation (16) qui sont fixées au dispositif de fixation (12) sur les angles d'un triangle imaginaire et **en ce que** le dispositif de fixation (12) comprend pour chaque patte de fixation (16) un palier pivotant dans toutes les directions (18,20), avec lequel les pattes de fixation (16) sont disposées sur le dispositif de fixation (12) avec une possibilité de pivotement dans toutes les directions.

2. Support selon la revendication 1, **caractérisé en ce que** les paliers pivotants dans toutes les directions (18, 20) sont munis d'articulations à rotules.

3. Support selon la revendication 1, **caractérisé en ce que** le support (10) est muni d'un socle pivotant (22) avec lequel un élément de maintien pour le téléphone mobile (40) est fixé de manière orientable sur le dispositif de fixation (12).

4. Support selon la revendication 3, **caractérisé en ce que** le socle pivotant (22) comprend un dispositif de blocage (26, 36).

5. Support selon la revendication 4, **caractérisé en ce que** le socle pivotant (22) comprend un dispositif de sécurité (26, 30, 32) qui maintient le socle pivotant (22) ensemble, même si le dispositif de blocage (26, 36) est entièrement desserré.

6. Support selon la revendication 3, **caractérisé en ce que** le socle pivotant (22) peut être orienté dans toutes les directions.

7. Support selon la revendication 6, **caractérisé en ce que** le socle pivotant (22) est muni d'une articulation en forme de calotte.

8. Support selon la revendication 3, **caractérisé en ce que** l'élément de maintien pour le téléphone mobile (40) comprend un dispositif (52, 54) pour la fixation au socle pivotant (22) qui permet une fixation de l'élément de maintien (40) sur le socle pivotant (22) dans au moins deux positions angulaires différentes.

9. Support selon la revendication 1, **caractérisé en ce que** le support (10) comprend un adaptateur (44) qui peut être relié au téléphone mobile et **en ce que** l'adaptateur (44) est fixé de manière démontable sur l'élément de maintien (40) recevant le téléphone mobile.

10. Support pour un téléphone mobile (portable) avec un dispositif de fixation pour placer le support dans un véhicule automobile, **caractérisé en ce que** le support (10) comprend un adaptateur (44) qui peut être relié au téléphone mobile et **en ce que** l'adaptateur (44) est fixé de manière démontable sur l'élément de maintien (40) recevant le téléphone mobile.
